(19) Europäisches Patentamt
European Patent Office
Office européen des brevets

(11) **EP 2 704 413 A2**

(12) **EUROPEAN PATENT APPLICATION**

(43) Date of publication:
**05.03.2014 Bulletin 2014/10**

(51) Int Cl.:
***H04N 1/32*** *(2006.01)*

(21) Application number: **13182020.1**

(22) Date of filing: **28.08.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Takahiro, Minami**<br>  **Chuo-ku, Osaka 540-8585 (JP)**<br>• **Shuji, Yamashita**<br>  **Osaka-shi, Osaka 540-8585 (JP)** |
| (30) Priority: **29.08.2012 JP 2012188478** | (74) Representative: **Becker Kurig Straus**<br>**Patentanwälte**<br>**Bavariastrasse 7**<br>**80336 München (DE)** |
| (71) Applicant: **Kyocera Document Solutions Inc.**<br>**Chuo-ku**<br>**Osaka 540-8585 (JP)** | |

(54) **Image reading apparatus having stamp function and document management system having document search function**

(57)    An image reading apparatus includes an image reading unit, a character stamp information reception unit receiving the input of character stamp information, a manuscript character information extraction unit, and an information-added image data generation unit. The information-added image data generation unit generates information-added image data serving as data where meta-information and a stamped image are caused to make a set. The meta-information is information where the character stamp information received by the character stamp information reception unit is added to manuscript character information extracted by the manuscript character information extraction unit.

FIG. 1

EP 2 704 413 A2

**Description**

BACKGROUND

The present disclosure relates to an image reading apparatus and a document management system. In particular, the present disclosure relates to a technology for causing an image, in which an image expressing a character is superimposed on the image of a manuscript, and information relating to a character string included in the corresponding superimposed image to make a set, and outputting the image and the information.

In the past, there was a technique for converting image data expressing the image of a manuscript read by a scanner unit in a multi function peripheral (MFP), into PDF data, creating text data by performing character recognition on this image data, creating a so-called searchable PDF by pasting this text data in the corresponding PDF data as transparent text data, and outputting the searchable PDF.

In addition, there was a technique for superimposing a bitmap expressing a character inputted by a user, on the image of a manuscript read by a reading unit (scanner unit).

Using these techniques, it may be possible to generate an image where a stamp character image is superimposed on the image of a manuscript, the stamp character image serving as an image expressing characters such as "for internal use only" or "Confidential", inputted by a user, extract information (manuscript character information) relating to a character string included in the generated image, and cause the generated image and the extracted manuscript character information to make a set and to be outputted.

However, when a character string is extracted from the image where the stamp character image is superimposed on the image of a manuscript, the characters expressed by the stamp character image may be identified as a drawing pattern, due to the low resolution of the stamp character image. Therefore, it is difficult to extract the characters expressed by the stamp character image. Alternatively, when the characters expressed by the stamp character image overlap with a character included in the image of a manuscript, it is difficult for the characters expressed by the stamp character image to be adequately identified as characters. Therefore, it is difficult to extract the characters expressed by the stamp character image.

SUMMARY

An image reading apparatus according to an embodiment of the present disclosure includes an image reading unit, a character stamp input information reception unit, a manuscript character information extraction unit, a stamped image generation unit, and an information-added image data generation unit. The image reading unit is configured to read an image of a manuscript.

The character stamp input information reception unit is configured to receive input of character stamp input information serving as information relating to a stamp character to be superimposed, as an image, on a manuscript image serving as an image read by the image reading unit. The manuscript character information extraction unit is configured to extract manuscript character information serving as information relating to a character string included in the manuscript image. The stamped image generation unit is configured to generate a stamp character image serving as an image expressing a stamp character corresponding to the character stamp input information received by the character stamp input information reception unit, and generate a stamped image serving as an image where the stamp character image is superimposed on the manuscript image, by superimposing the generated stamp character image on the manuscript image. The information-added image data generation unit is configured to generate information-added image data where meta-information and the stamped image are caused to make a set, the meta-information serving as information where the character stamp input information received by the character stamp input information reception unit is added to the manuscript character information extracted by the manuscript character information extraction unit.

A document management system according to another embodiment of the present disclosure includes an image reading apparatus, an information-added image data storage unit, and a search server. The information-added image data storage unit is configured to store therein the information-added image data generated by the information-added image data generation unit. The search server is configured to search for information-added image data whose meta-information includes a search keyword specified by a user, within the information-added image data stored in the information-added image data storage unit.

According to the present disclosure, it may become possible to provide an image reading apparatus and a document management system, which are capable of reliably outputting a character corresponding to a stamp character image when a stamped image where the stamp character image serving as an image expressing a character is superimposed on the image of a manuscript and information relating to a character string included in the stamped image are caused to make a set and be output.

Additional features and advantages are described herein, and will be apparent from the following Detailed Description and the figures.

BRIEF DESCRIPTION OF THE DRAWINGS

Fig. 1 is a system configuration diagram illustrating an example of a document management system relating to the present disclosure;

Fig. 2 is a schematic structural diagram illustrating an example of a multi function peripheral including an image reading apparatus according to the present disclosure;

Fig. 3 is a block diagram illustrating an example of an electrical configuration of a multi function peripheral;

Fig. 4 is a flowchart illustrating an example of an operation for generating information-added image data;

Fig. 5 is an explanatory diagram illustrating an example of a setting screen for a character stamp function;

Fig. 6 is an explanatory diagram illustrating an example of character stamp input information;

Fig. 7 is an explanatory diagram illustrating an example of a manuscript image;

Fig. 8 is an explanatory diagram illustrating an example of a relationship between a manuscript image and an extracting image;

Fig. 9 is an explanatory diagram illustrating an example of an extracting image;

Fig. 10 is an explanatory diagram illustrating an example of information relating to a character string extracted from an extracting image;

Fig. 11 is an explanatory diagram illustrating an example of manuscript character information;

Fig. 12 is an explanatory diagram illustrating an example of a stamped image; and

Fig. 13 is an explanatory diagram illustrating an example of meta-information.

DETAILED DESCRIPTION

Hereinafter, an embodiment according to the present disclosure will be described in view of the drawings.

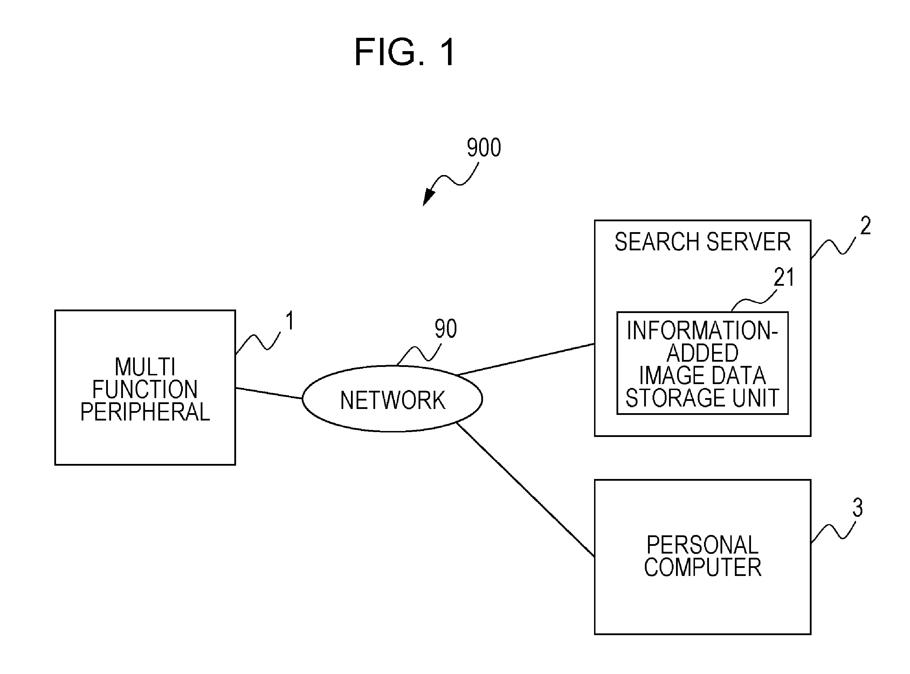

Fig. 1 is a system configuration diagram illustrating an example of a document management system 900 according to the present disclosure.

As illustrated in Fig. 1, a multi function peripheral 1 serving as an example of an image reading apparatus according to the present disclosure, a search server 2, and a personal computer (hereinafter, referred to as PC) 3 are connected to a network 90 such as a local area network (LAN). The multi function peripheral 1, the search server 2, and the PC 3 may transmit and receive various kinds of data to and from each other through the network 90.

The multi function peripheral 1 prints the image of a manuscript, read by the image reading unit 5.

In addition, the multi function peripheral 1 receives, through the network 90, image data transmitted from the search server 2 or the PC 3, and prints an image on the basis of the received image data.

In addition, the multi function peripheral 1 transmits, to the search server 2 through the network 90, information-added image data serving as data where an image and meta-information serving as information relating to a character string included in the corresponding image are caused to make a set, the information-added image data being generated by the after-mentioned information-added image data generation unit 84.

The search server 2 stores the received information-added image data, in an information-added image data storage unit 21 included in the search server 2.

After receiving, through the network 90, a search keyword specified by the operations of the multi function peripheral 1 and the personal computer 3 by a user, the search server 2 searches for information-added image data whose meta-information includes the keyword, within the information-added image data stored in the information-added image data storage unit 21.

In addition, the search server 2 sends back, to the transmission source of the search keyword, the information-added image data whose meta-information includes the search keyword and which serves as the search result.

In this way, the document management system 900 is configured to include the multi function peripheral 1, the search server 2, and the PC 3.

The configuration of the document management system 900 is not limited to this, and a simplified configuration including no PC 3 may also be used.

Hereinafter, the multi function peripheral 1 will be described.

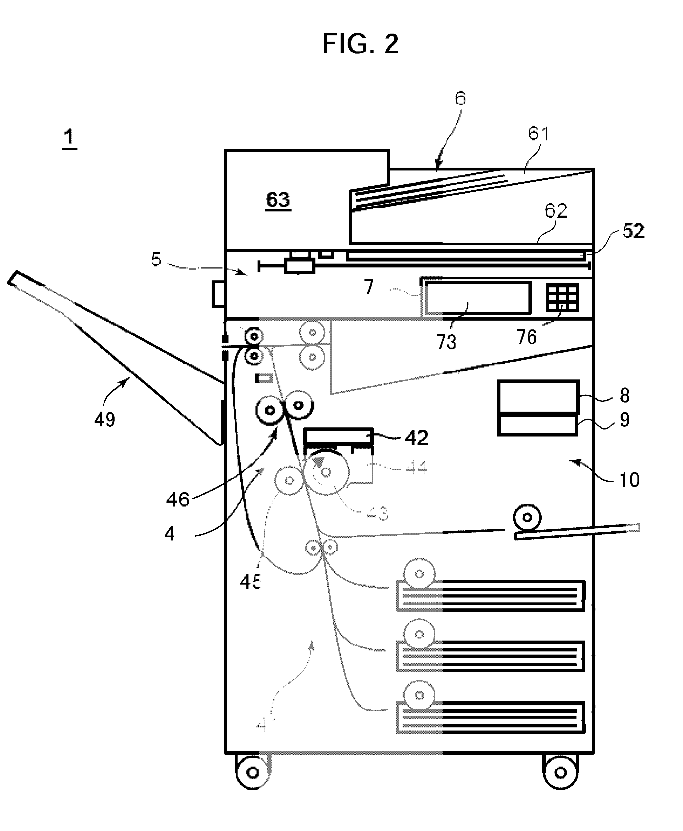

Fig. 2 is a schematic structural diagram illustrating an example of the multi function peripheral 1 including an image reading apparatus according to the present disclosure.

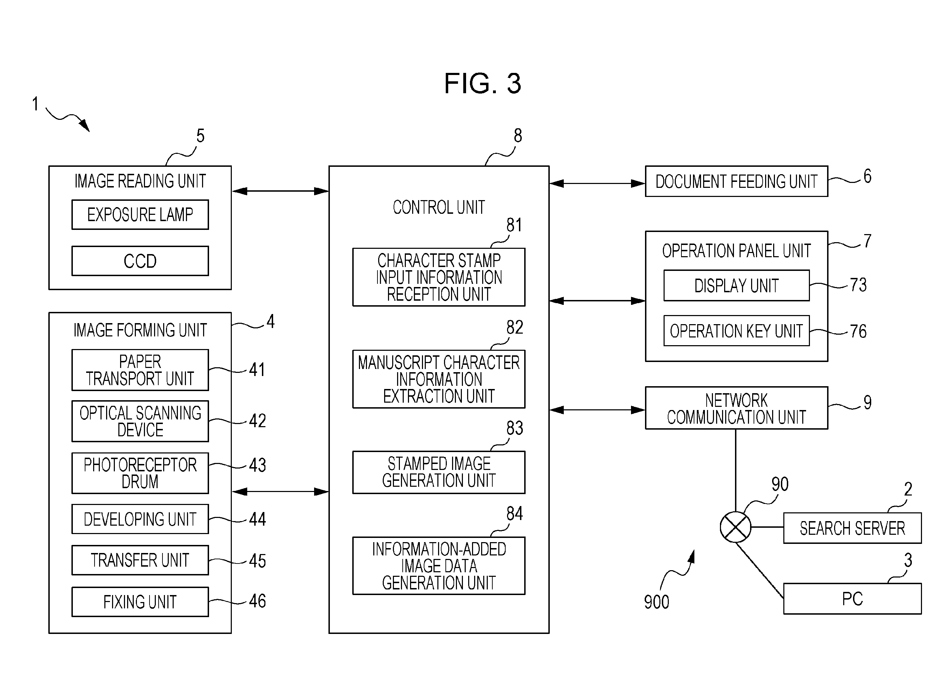

Fig. 3 is a block diagram illustrating an example of the electrical configuration of the multi function peripheral 1.

As illustrated in Fig. 2, the multi function peripheral 1 includes a main body portion 10, an image reading unit 5, and a document feeding unit 6.

At the front portion of the multi function peripheral 1, an operation panel unit 7 is provided.

The operation panel unit 7 includes a display unit 73 and an operation key unit 76.

The main body portion 10 includes a network communication unit 9 and a control unit 8 managing the operation control of the whole apparatus.

An image forming unit 4 includes a paper transport unit 41, an optical scanning device 42, a photoreceptor drum 43, a developing unit 44, a transfer unit 45, and a fixing unit 46.

The network communication unit 9 is a communication interface circuit used for transmitting and receiving various kinds of data to and from the search server 2 or the PC 3, connected to the network 90.

The control unit 8 includes a central processing unit (CPU), a memory such as a read only memory (ROM) or a random access memory (RAM), application specific integrated circuits (ASIC) serving as dedicated hardware configured so as to be capable of performing predetermined processing such as image processing at high speed, and a microcomputer (computer) including these peripheral circuits and so forth.

By causing the CPU to execute a control program stored in the ROM or the like, the control unit 8 executes various kinds of processing operations, and causes the operation of each unit within the multi function peripheral 1 to be controlled.

Due to this, the control unit 8 individually executes a plurality of functions provided in the multi function peripheral 1.

In the present embodiment, in particular, the control unit 8 configures a character stamp input information reception unit 81, a manuscript character information extraction unit 82, a stamped image generation unit 83, and an information-added image data generation unit 84, as processing units executing a plurality of functions.

Hereinafter, an operation will be described that is used for generating information-added image data using the character stamp input information reception unit 81, the manuscript character information extraction unit 82, the stamped image generation unit 83, and the information-added image data generation unit 84. The individual processing units will be described in the corresponding description.

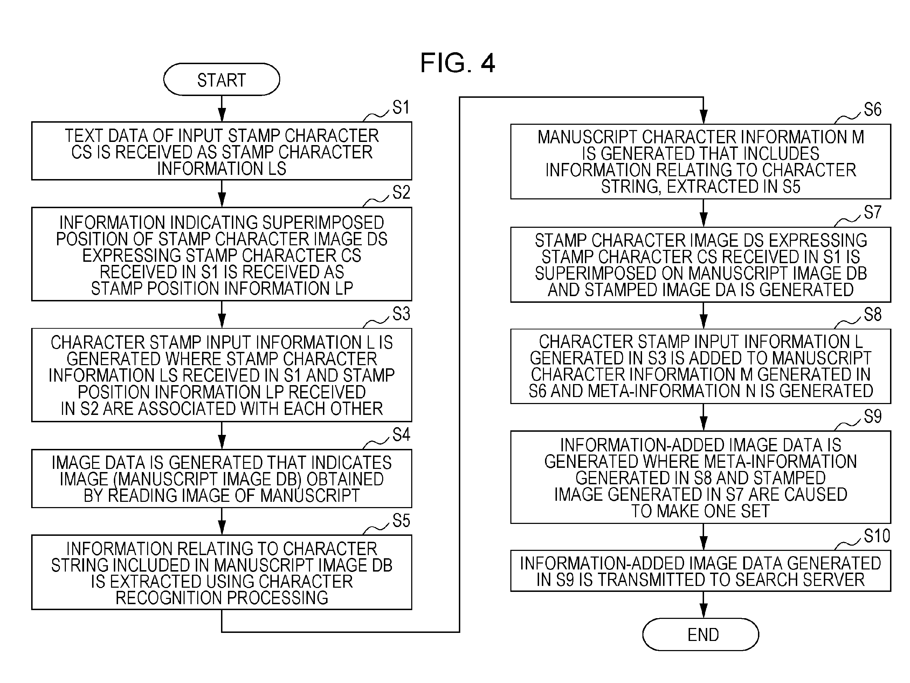

Fig. 4 is a flowchart illustrating an example of an operation for generating information-added image data.

As illustrated in Fig. 4, first, by executing a step S1 to a step S3, the character stamp input information reception unit 81 receives the input of character stamp input information L serving as information relating to a stamp character CS serving as a character to be superimposed, as an image, on a manuscript image DB.

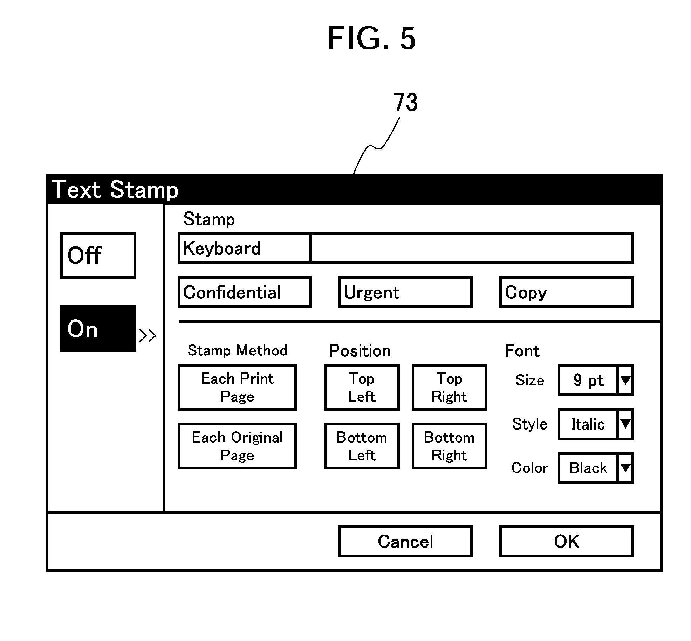

Specifically, when the user operates the operation panel unit 7 (Fig. 3) and selects the stamp function, the screen illustrated in Fig. 5 is displayed. Here, in the display unit 73, the control unit 8 displays selection menus such as "Confidential", "Urgent", "Copy", and so forth, as options for the stamp character CS.

In addition, when the user selects the selection menu of "Confidential", the character stamp input information reception unit 81 receives the character information of "Confidential" expressed by text data, as stamp character information LS serving as information indicating the stamp character CS (step S1).

In addition, pieces of text data corresponding to the individual selection menus are preliminarily stored in the ROM or the like.

Next, in the display unit 73, the control unit 8 displays selection menus indicating a plurality of positions such as "Top Left", "Top Right", "Bottom Left", and "Bottom Right", preliminarily defined as positions used when a stamp character image DS serving as an image expressing the stamp character CS corresponding to the stamp character information LS received in the step S1 is superimposed on the manuscript image DB (refer to key display under "Position" in Fig. 5).

In addition, when the user selects the selection menu of "Bottom Right", the character stamp input information reception unit 81 receives information indicating the position of the "Bottom Right", as stamp position information LP serving as information indicating a position in which the stamp character image DS is to be superimposed in the manuscript image DB (step S2).

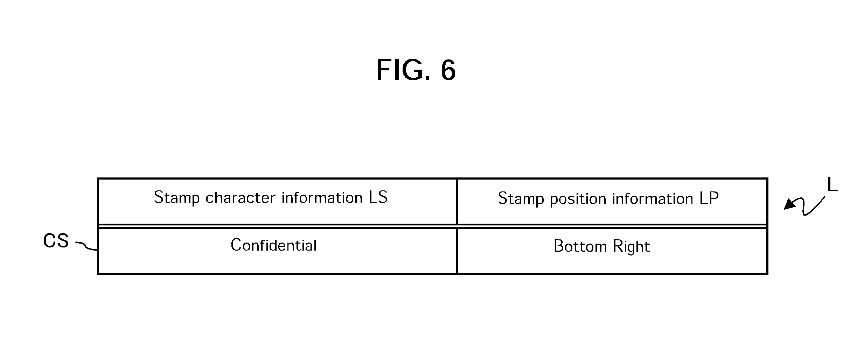

Fig. 6 is an explanatory diagram illustrating an example of the character stamp input information L.

In addition, as illustrated in Fig. 6, the character stamp input information reception unit 81 generates the character stamp input information L serving as information where the stamp character information LS received in the step S1 and the stamp position information LP received in the step S2 are associated with each other. The stamp character information LS indicates the stamp character CS, the stamp position information LP indicates the position in which the stamp character image DS is to be superimposed in the manuscript image DB. In addition, the character stamp input information reception unit 81 stores the character stamp input information L in the RAM (step S3).

In addition, when the user holds down the start key on the operation panel unit 7 (Fig. 3) and an instruction to start a transmission function for the information-added image data has been inputted, the control unit 8 receives the corresponding input, and begins generating the information-added image data.

When the operation for generating the information-added image data begins, the control unit 8 causes the image reading unit 5 to read the image of a manuscript and generate image data indicating the manuscript image DB serving as the read image (step S4).

Here, the manuscript image DB will be described that is used as a specific example in the following description.

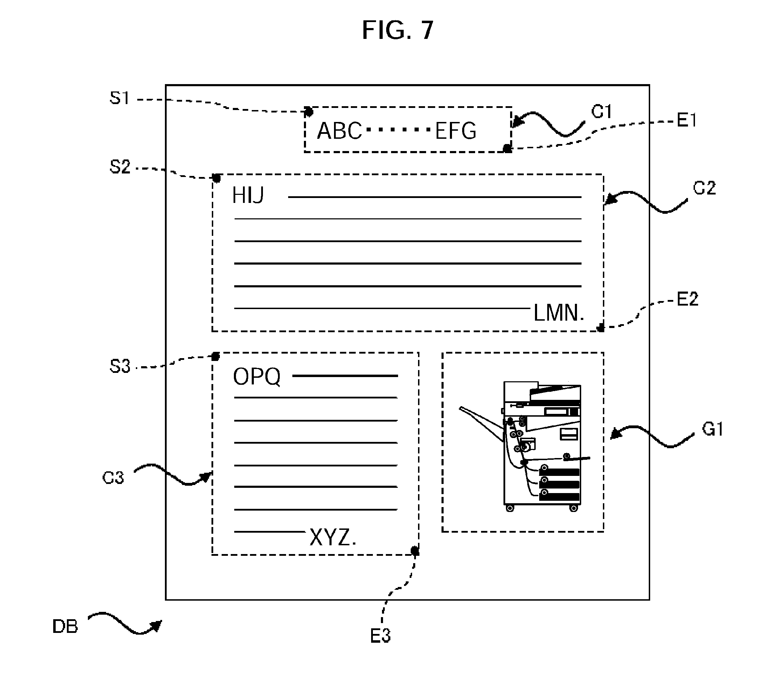

Fig. 7 is an explanatory diagram illustrating an example of the manuscript image DB.

As illustrated in Fig. 7, in the manuscript image DB, a character string C1 is included where "ABC⋯EFG" is described in a rectangular area defined by the coordinates S1 of a top-left pixel and the coordinates E1 of a bottom-right pixel.

In addition, in the manuscript image DB, a character string C2 is included where "HIJ⋯LMN." is described in a rectangular area defined by the coordinates S2 of a top-left pixel and the coordinates E2 of a bottom-right pixel.

In addition, in the manuscript image DB, a character string C3 is included where "OPQ⋯XYZ." is described in a rectangular area defined by the coordinates S3 of a top-left pixel and the coordinates E3 of a bottom-right pixel.

In addition, in the manuscript image DB, an image is also included that is indicated by a symbol G1.

Referring back to Fig. 4, next, by executing character recognition processing such as optical character recognition (OCR), the manuscript character information extraction unit 82 extracts information relating to a character string included in the manuscript image DB indicated by the image data generated in the step S4 (step S5).

Specifically, in the step S5, the manuscript character information extraction unit 82 converts the resolution of the manuscript image DB indicated by the image data generated in the step S4, into a resolution preliminarily defined so as to be capable of enhancing the extraction accuracy of the information relating to the character string included in the manuscript image DB.

The manuscript character information extraction unit 82 then converts the manuscript image DB into an extracting image DT serving as an image having the preliminarily defined resolution.

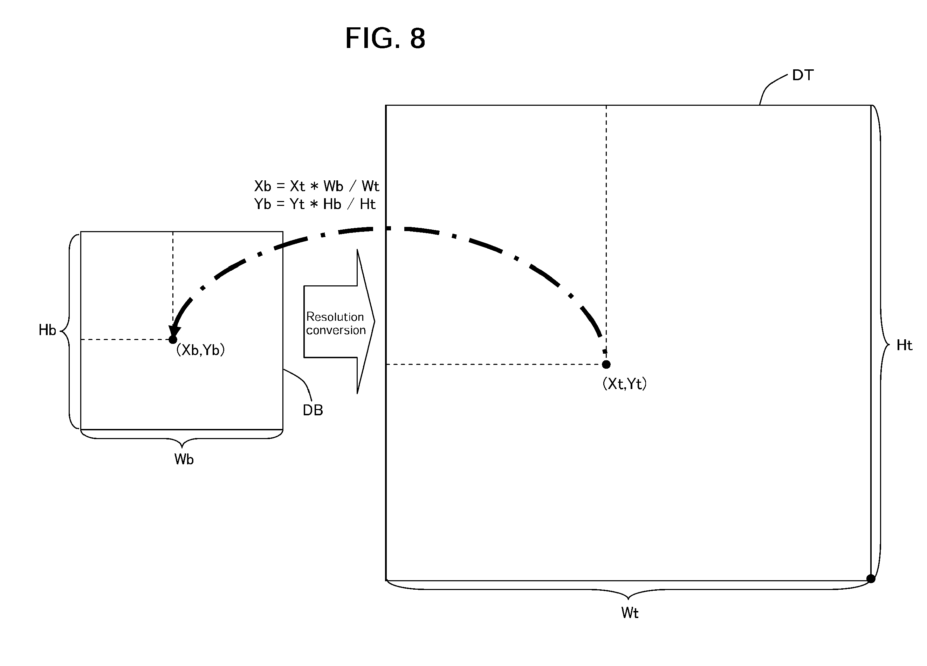

Fig. 8 is an explanatory diagram illustrating an example of the relationship between the manuscript image DB and the extracting image DT.

As illustrated in Fig. 8, the manuscript character information extraction unit 82 converts the manuscript image DB generated in step S4, into the image DT used for extracting a resolution, the manuscript image DB having a resolution expressed by Wb pixels in a horizontal direction and Hb pixels in a vertical direction, the extracting image DT having a resolution expressed by Wt pixels in a horizontal direction and Ht pixels in a vertical direction and preliminarily defined so as to be capable of enhancing the extraction accuracy of the information relating to the character string included in the manuscript image DB.

In addition, in Fig. 8, for convenience of explanation, the size of the manuscript image DB and the size of the extracting image DT are illustrated so as to be different from each other.

Hereinafter, the coordinates of a pixel Xth from the left in the horizontal direction and Yth from the top in the vertical direction are indicated by (X, Y).

In other words, coordinates (Xb, Yb) in the manuscript image DB, which correspond to coordinates (Xt, Yt) in the extracting image DT, may be calculated based on the following Expressions (1) and (2), using the number Wt of pixels in the horizontal direction and the number Ht of pixels in the vertical direction in the extracting image DT and the coordinates (Xt, Yt) in the extracting image DT.

$$Xb=Xt*Wb/Wt \cdots (1)$$

$$Yb=Yt*Hb/Ht \cdots (2)$$

In the above, "*" means multiplication (multiplying), and "/" means division (dividing).

In other words, the coordinate position of the manuscript image DB and the coordinate position of the extracting image DT are associated with each other by the Expressions (1) and (2).

Next, the manuscript character information extraction unit 82 executes, on the extracting image DT, well-known character recognition processing such as OCR, and extracts information relating to the character string included in the extracting image DT.

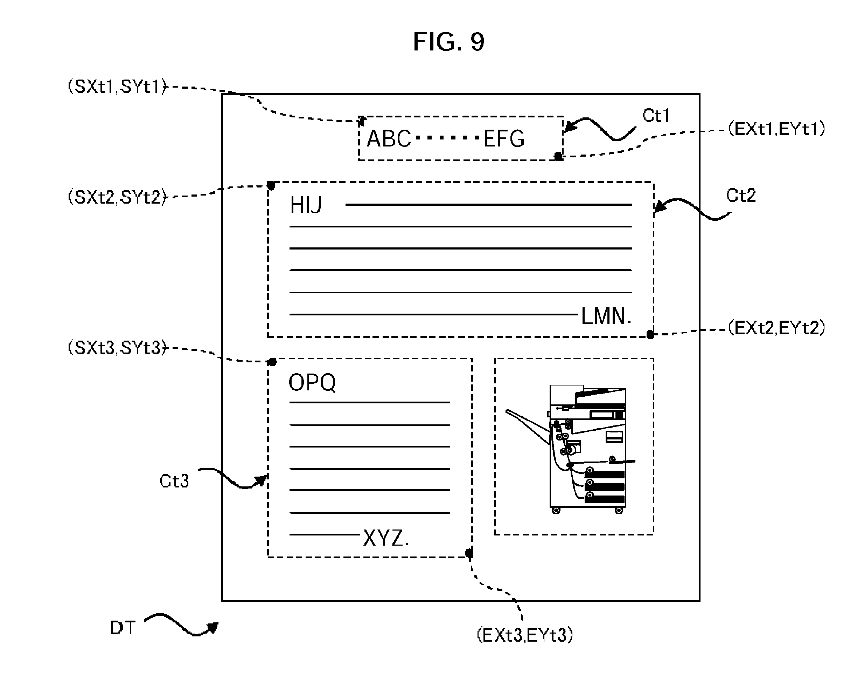

Fig. 9 is an explanatory diagram illustrating an example of the extracting image DT.

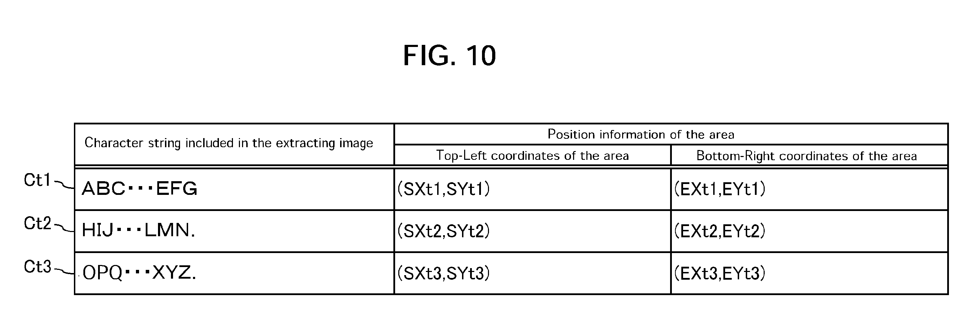

Fig. 10 is an explanatory diagram illustrating an example of information relating to the character string extracted from the extracting image DT.

As illustrated in Fig. 9, by executing the character recognition processing on the extracting image DT, the manuscript character information extraction unit 82 identifies that the character string Ct1 exists where "ABC···EFG" is described in the rectangular area defined by top-left coordinates (SXt1, SYt1) and bottom-right coordinates (EXt1, EYt1).

In addition, as illustrated in Fig. 10, the manuscript character information extraction unit 82 stores, in the RAM, information indicating the character string Ct1 and information indicating the top-left coordinates (SXt1, SYt1) and the bottom-right coordinates (EXt1, EYt1), by associating the information indicating the character string Ct1 and the information indicating the top-left coordinates (SXt1, SYt1) and the bottom-right coordinates (EXt1, EYt1) with each other, the top-left coordinates (SXt1, SYt1) and the bottom-right coordinates (EXt1, EYt1) defining an area in which the character string Ct1 is located.

In the same manner, the manuscript character information extraction unit 82 stores, in the RAM, information indicating the character string Ct2 in which "HIJ···LMN." is described and information indicating top-left coordinates (SXt2, SYt2) and bottom-right coordinates (EXt2, EYt2), by associating the information indicating the character string Ct2 and the information indicating the top-left coordinates (SXt2, SYt2) and the bottom-right coordinates (EXt2, EYt2) with each other, the top-left coordinates (SXt2, SYt2) and the bottom-right coordinates (Ext2, EYt2) defining an area in which the character string Ct2 is located.

In addition, the manuscript character information extraction unit 82 stores, in the RAM, information indicating the character string Ct3 in which "OPQ···XYZ." is described and information indicating top-left coordinates (SXt3, SYt3) and bottom-right coordinates (Ext3, EYt3), by associating the information indicating the character string Ct3 and the information indicating the top-left coordinates (SXt3, SYt3) and the bottom-right coordinates (Ext3, EYt3) with each other, the top-left coordinates (SXt3, SYt3) and the bottom-right coordinates (Ext3, EYt3) defining an area in which the character string Ct3 is located.

Moreover, the manuscript character information extraction unit 82 acquires, as text data, information that indicates the character strings Ct1 to Ct3 included in the extracting image DT and is stored in the RAM, and defines the information as character string information MS serving as information indicating the character strings C1 to C3 included in the manuscript image DB.

In addition, the manuscript character information extraction unit 82 acquires information stored in the RAM, the information indicating the top-left coordinates and bottom-right coordinates defining areas in which the individual character strings Ct1 to Ct3 are located in the extracting image DT. In addition, the manuscript character information extraction unit 82 individually converts coordinates indicated by the acquired information, into coordinates corresponding to the manuscript image DB, using the above-mentioned Expressions (1) and (2).

Additionally, the manuscript character information extraction unit 82 defines information indicating the above-mentioned coordinates after modification, as position information MP indicating positions in which the individual character strings C1 to C3 included in the manuscript image DB are disposed.

Specifically, using the above-mentioned Expression (1), the manuscript character information extraction unit 82 converts the top-left coordinates (SXt1, SYt1) defining the area in which the character string Ct1 is located in the extracting image DT, into coordinates (SXt1*Wb/Wt, SYt1*Hb/Ht) in the manuscript image DB.

The corresponding coordinates after conversion are defined as the top-left coordinates S1 (Fig. 7) of the area in which the character string C1 is located in the manuscript image DB.

Using the above-mentioned Expression (2), the manuscript character information extraction unit 82 converts the bottom-right coordinates (EXt1, EYt1) defining the area in which the character string Ct1 is located in the extracting image DT, into coordinates (EXt1*Wb/Wt, EYt1*Hb/Ht) in the manuscript image DB.

The corresponding coordinates after conversion are defined as the bottom-right coordinates E1 of the area in which the character string C1 is located in the manuscript image DB.

The Wb indicates the number of pixels in the horizontal direction in the manuscript image DB, and the Wt indicates the number of pixels in the horizontal direction in the extracting image DT.

The Hb indicates the number of pixels in the vertical direction in the manuscript image DB, and the Ht indicates the number of pixels in the vertical direction in the extracting image DT.

In the same manner, the manuscript character information extraction unit 82 converts the top-left coordinates (SXt2, SYt2) defining the area in which the character string Ct2 is located, into coordinates (SXt2*Wb/Wt, SYt2*Hb/Ht) in the manuscript image DB. In addition to this, the manuscript character information extraction unit 82 converts the bottom-right coordinates (EXt2, EYt2) defining the area in which the character string Ct2 is located, into coordinates (EXt2*Wb/Wt, EYt2*Hb/Ht) in the manuscript image DB.

The manuscript character information extraction unit 82 defines the corresponding coordinates after conversion, as the top-left coordinates S2 and the bottom-right coordinates E2 (Fig. 7) of the area in which the character string C2 is located in the manuscript image DB.

The manuscript character information extraction unit 82 converts the top-left coordinates (SXt3, SYt3) defining the area in which the character string Ct3 is located, into coordinates (SXt3*Wb/Wt, SYt3*Hb/Ht) corresponding to the manuscript image DB. In addition to this, the manuscript character information extraction unit 82 converts the bottom-right coordinates (Ext3, EYt3) defining the area in which the character string Ct3 is located, into coordinates (Ext3*Wb/Wt, EYt3*Hb/Ht) corresponding to the manuscript image DB.

The manuscript character information extraction unit 82 defines the corresponding coordinates after conversion, as the top-left coordinates S3 and the bottom-right coordinates E3 (Fig. 7) of the area in which the character string C3 is located in the manuscript image DB.

In this way, in the step S5, the manuscript character information extraction unit 82 extracts, from the manuscript image DB, the character string information MS and the position information MP, the character string information MS serving as information indicating the character strings C1 to C3 included in the manuscript image DB, the position information MP indicating positions in which the character strings C1 to C3 included in the manuscript image DB are located.

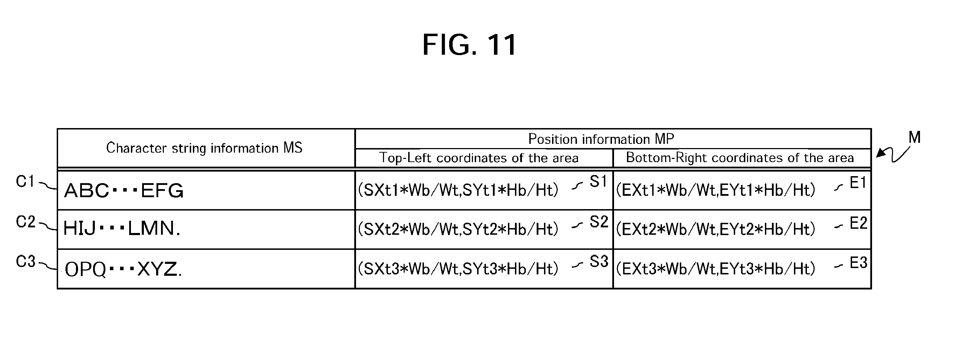

Fig. 11 is an explanatory diagram illustrating an example of manuscript character information M.

As illustrated in Fig. 11, the manuscript character information extraction unit 82 generates the manuscript character information M serving as information where the character string information MS and the position information MP, extracted in step S5, are associated with each other. The character string information MS indicates the character strings C1 to C3 included in the manuscript image DB. The position information MP indicates the positions in which the character strings C1 to C3 included in the manuscript image DB are located. And the manuscript character information extraction unit 82 stores the manuscript character information M in the RAM (step S6).

Returning to Fig. 4, the stamped image generation unit 83 generates the stamp character image DS that serves as an image having the same resolution as the manuscript image DB and generates the stamp character CS ("Confidential" in Fig. 6) corresponding to the stamp character information LS received in the step S1.

In addition, the stamped image generation unit 83 superimposes the generated stamp character image DS, at a position ("Bottom Right" in Fig. 6) in the manuscript image DB, which corresponds to the stamp position information LP received in the step S2.

Accordingly, the stamped image generation unit 83 generates a stamped image DA that serves as an image where the stamp character image DS expressing the stamp character CS is superimposed on the manuscript image DB (step S7).

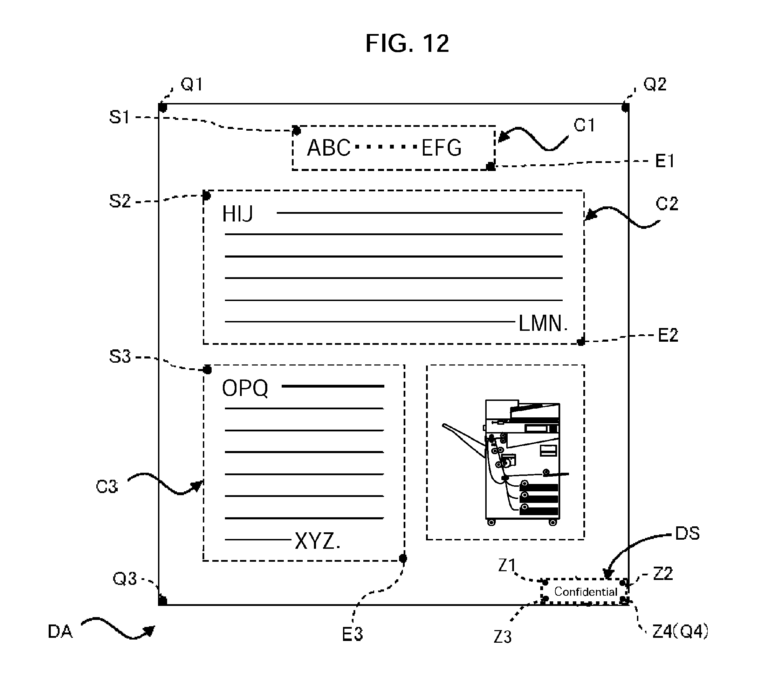

Fig. 12 is an explanatory diagram illustrating an example of the stamped image DA.

Specifically, in step S7, as illustrated in Fig. 12, when a position corresponding to the stamp position information LP indicates the position of the "Bottom Right" in the manuscript image DB, the stamped image generation unit 83 generates the stamped image DA by superimposing the stamp character image DS on the manuscript image DB so that the coordinates $Z_4$ of a bottom-right pixel in the generated stamp character image DS overlap with the coordinates $Q_4$ of a bottom-right pixel in the manuscript image DB.

The bottom-right pixel indicates the pixel located at an end in the horizontal direction and also located at an end in the vertical direction.

In the same manner, in step S7, when the position corresponding to the stamp position information LP indicates the position of the "Top Left" in the manuscript image DB, the stamped image generation unit 83 superimposes the stamp character image DS on the manuscript image DB so that the coordinates $Z_1$ of a top-left pixel in the generated stamp character image DS overlap with the coordinates $Q_1$ of a top-left pixel in the manuscript image DB.

The top-left pixel indicates the pixel, which serves as the first pixel in the horizontal direction and also the first pixel in the vertical direction.

In step S7, when the position corresponding to the stamp position information LP indicates the position of the "Top Right" in the manuscript image DB, the stamped image generation unit 83 superimposes the stamp character image DS on the manuscript image DB so that the coordinates $Z_2$ of the top-right pixel in the generated stamp character image DS overlap with the coordinates $Q_2$ of the top-right pixel in the manuscript image DB.

The top-right pixel indicates the pixel, which is located at an end in the horizontal direction and also the first pixel in the vertical direction.

In step S7, when the position corresponding to the stamp position information LP indicates the position of the "Bottom Left" in the manuscript image DB, the stamped image generation unit 83 superimposes the stamp character image DS on the manuscript image DB so that the coordinates $Z_3$ of a bottom-left pixel in the generated stamp character image DS overlap with the coordinates $Q_3$ of a bottom-left pixel in the manuscript image DB.

The bottom-left pixel indicates the pixel, which is the first pixel in the horizontal direction and also located at an end in the vertical direction.

Referring again to Fig. 4, the information-added image data generation unit 84 adds the character stamp input information L (Fig. 6) generated in the step S3, to the manuscript character information M (Fig. 11) generated by the manuscript character information extraction unit 82 in the step S6, and generates meta-information N (step S8).

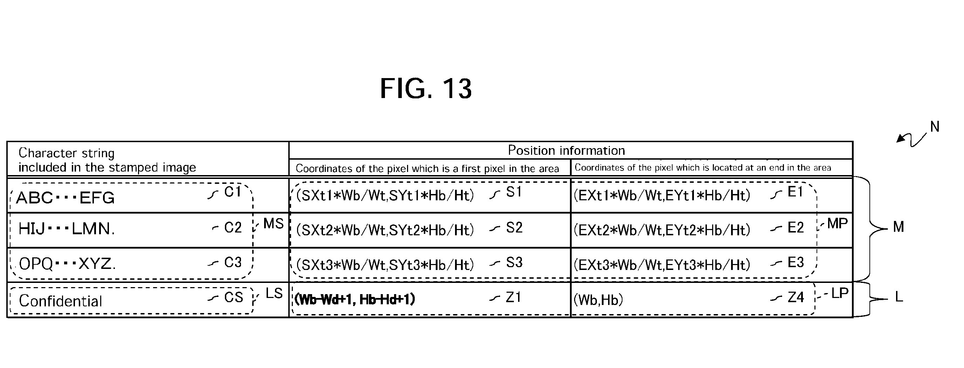

Fig. 13 is an explanatory diagram illustrating an example of the meta-information N.

As illustrated in Fig. 3, when the stamp position information LP (Fig. 6) indicates the position of the "Bottom Right" in the manuscript image DB, the information-added image data generation unit 84 converts the stamp position information LP into information indicating the top-left coordinates $Z_1$ (Fig. 12) and the top-right coordinates $Z_4$ (Fig. 12), which define an area on which the stamp character image DS is superimposed in the manuscript image DB.

Specifically, when it is assumed that the number of pixels in the horizontal direction and the number of pixels in the vertical direction in the stamp character image DS are Wd and Hd, respectively, and the number of pixels in the horizontal direction and the number of pixels in the vertical direction in the manuscript image DB are Wb and Hb, respectively, the coordinates $Z_1$ are expressed using (Wb-Wd+1, Hb-Hd+1), and the coordinates $Z_4$ are expressed using (Wb, Hb).

In the same manner, when the stamp position information LP indicates the position of the "Top Left" in the manuscript image DB, the information-added image data generation unit 84 converts the stamp position information LP into information indicating top-left coordinates (1, 1) and bottom-right coordinates (Wd, Hd), which define an area on which the stamp character image DS is superimposed in the manuscript image DB.

When the stamp position information LP indicates the position of the "Top Right" in the manuscript image DB, the information-added image data generation unit 84 converts the stamp position information LP into information indicating top-left coordinates (Wb-Wd+1, 1) and bottom-right coordinates (Wb, Hd), which define an area on which the stamp character image DS is superimposed in the manuscript image DB.

When the stamp position information LP indicates the position of the "Bottom Left" in the manuscript image DB, the information-added image data generation unit 84 converts the stamp position information LP into information indicating top-left coordinates (1, Hb-Hd+1) and bottom-right coordinates (Wd, Hb), which define an area on which the stamp character image DS is superimposed in the manuscript image DB.

In place of converting the above-mentioned stamp position information LP into information indicating coordinates in the manuscript image DB, the information-added image data generation unit 84 may also convert the stamp position information LP into text data indicating the position (for example, "Bottom Right") preliminarily defined in the manuscript image DB.

The information-added image data generation unit 84 generates the meta-information N that serves as the information where the stamp position information LP is added to the manuscript character information M (Fig.

11) that serves as information relating to the character strings C1 to C3 included in the manuscript image DB and has been generated by the manuscript character information extraction unit 82 in step S6.

Returning to Fig. 4, the information-added image data generation unit 84 generates information-added image data that serves as data where the meta-information N generated in the step S8 and the stamped image DA generated by the stamped image generation unit 83 in step S7 are caused to make a set (step S9).

Specifically, in step S9, the information-added image data generation unit 84 generates text data (a so-called transparent text) expressing the character strings C1 to C3 corresponding to the manuscript character information M included in the meta-information N and text data (a so-called transparent text) expressing the stamp character CS corresponding to the character stamp input information L included in the meta-information N.

In addition, by superimposing the generated text data on the stamped image DA, the information-added image data generation unit 84 generates, as information-added image data, data that has a so-called searchable PDF format and where the meta-information N and the stamped image DA are caused to make a set.

The information-added image data generation unit 84 causes the network communication unit 9 to transmit the information-added image data generated in the step S9, to the search server 2 connected to the network 90 (step S10).

In other words, due to the image reading unit 5 and the control unit 8, an example of an image reading apparatus according to the present disclosure is configured.

According to the configuration of the above-mentioned embodiment, the meta-information N included in the information-added image data includes the manuscript character information M that relates to the character string included in the manuscript image DB and the character stamp input information L received by the character stamp input information reception unit 81.

Accordingly, without, owing to character recognition processing such as the OCR, extracting the character string included in the stamped image DA, the meta-information N includes the input character stamp input information L, namely, information relating to the input stamp character CS.

Therefore, when information relating to the character string has been extracted from the stamped image DA, it may be possible to avoid the likelihood that information relating to the stamp character CS is not extracted, and it may be possible to output information-added image data reliably including information relating to the stamp character CS.

According to the configuration of the above-mentioned embodiment, the meta-information N (Fig. 13) included in the information-added image data include, as the manuscript character information M, the character string information MS indicating the character string included in the manuscript image DB and the position information MP indicating the position in which the above-mentioned character string is located in the manuscript image DB.

The meta-information N includes, as the character stamp input information L (Fig. 6), the stamp character information LS that indicates the stamp character CS and the stamp position information LP that indicates the position in which the stamp character image DS corresponding to the stamp character CS is superimposed in the manuscript image DB.

Therefore, using the meta-information N (Fig. 13) included in the information-added image data, it may be possible to understand the character string and the stamp character CS, included in the manuscript image DB.

Furthermore, using the meta-information N included in the information-added image data, it may be possible to understand which position each of the character string and the stamp character CS, included in the manuscript image DB, is located in.

Since having the same resolution as the manuscript image DB, the stamp character image DS may be easily superimposed in a position in the manuscript image DB, indicated by the stamp position information LP.

According to the configuration of the above-mentioned embodiment, using the image DT used for extracting a resolution preliminarily defined so as to be capable of enhancing the extraction accuracy of the manuscript character information M, it may be possible to accurately extract information (Fig. 10) indicating the character string included in the extracting image DT and information (Fig. 10) indicating the position in which an extracted character string exists in the extracting image DT.

In other words, by generating the manuscript character information M using the corresponding extracted information (step S6), it may be possible to enhance the accuracy of extracting the manuscript character information M from the manuscript image DB.

According to the configuration of the above-mentioned embodiment, since the information-added image data is data that has a so-called searchable PDF format and where the meta-information N and the stamped image DA are caused to make a set, it may be possible to display the stamped image DA in the same layout using software in which data having the searchable PDF format is available, in a variety of computers in which various kinds of operating systems (OSs) are installed.

It may be possible to also search for a character expressed by data superimposed on the stamped image DA.

According to the configuration of the above-mentioned embodiment, by designating, as the search keyword, characters such as "secrecy", which indicate being confidential information, it may be possible to cause the search server 2 to search for information-added image data including the stamped image DA on which the stamp character image DS corresponding to the stamp character CS is superimposed with defining, as the corresponding stamp character CS, the characters such as "secrecy", which indicate being confidential information.

In other words, it may be possible to designate, as the search keyword, the stamp character CS expressed by the stamp character image DS, and it may be possible to improve the convenience of the stamped image DA.

In the above-mentioned embodiment, the configurations illustrated in Fig. 1 to Fig. 13 are just examples, and there is no intention of limiting the present disclosure to the above-mentioned embodiment.

For example, a simplified configuration may also be adopted so as not to execute the step S10.

In accordance with this, a configuration may also be adopted so as to store, in the RAM in the multi function peripheral 1, the information-added image data generated by the information-added image data generation unit 84, and the information-added image data may be caused to be only available in the multi function peripheral 1.

While it has been assumed that the format of the information-added image data generated by the information-added image data generation unit 84 in the step S9 is a so-called searchable PDF format where the meta-information N and the stamped image DA are caused to make a set, there is no intention of limiting to this.

The information-added image data generation unit 84 may also provide the character string indicating the meta-information N and the stamped image DA, in one data file, and may also generate this as the information-added image data.

In step S7, the stamped image generation unit 83 generated the stamp character image DS having the same resolution as the manuscript image DB, superimposed the generated stamp character image DS in a position (for example, "Bottom Right" in Fig. 6) corresponding to the stamp position information LP in the manuscript image DB, and generated the stamped image DA.

However, instead of this, the configuration may also be adopted where, in step S7, after having generated the stamp character image DS having the same resolution as the manuscript image DB, the stamped image generation unit 83 converts this into a tentative stamp character image having the same resolution as the extracting image DT used by the manuscript character information extraction unit 82 in the step S5.

A configuration may also be adopted where the stamped image generation unit 83 superimposes the tentative stamp character image in a position in the extracting image DT, the position (a position in which the bottom-right pixel in the extracting image DT and the bottom-right pixel in the tentative stamp character image overlap with each other when the stamp position information LP is information indicating the position of the "Bottom Right" in the manuscript image DB) corresponding to the stamp position information LP, and generates the extracting image DT on which the tentative stamp character image is superimposed.

A configuration may also be adopted where the stamped image generation unit 83 generates the stamped image DA by converting the extracting image DT on which the corresponding generated tentative stamp character image is superimposed, into an image having the same resolution as the manuscript image DB.

In step S5, the manuscript character information extraction unit 82 converted the manuscript image DB generated in step S4, into the extracting image DT, executed the character recognition processing on the extracting image DT, and extracted information (Fig. 10) relating to a character string included in the extracting image DT.

However, instead of this, a configuration may also be used where, in step S5, the manuscript character information extraction unit 82 executes the character recognition processing on the manuscript image DB without converting the manuscript image DB into the extracting image DT, and directly extracts the character string information MS indicating the character string included in the manuscript image DB and the position information MP including top-left coordinates and bottom-right coordinates, which define an area in which the corresponding character string is disposed in the manuscript image DB.

While, in the above-mentioned configuration, the character stamp input information L is configured as information where the stamp character information LS and the stamp position information LP are associated with each other, instead of this, the character stamp input information L may also be configured only using the stamp character information LS.

In this regard, however, in accordance with this, it is desirable that the position in which the stamp character image DS is superimposed on the manuscript image DB is preliminarily and fixedly defined in accordance with the resolution of the manuscript image DB.

While the manuscript character information M is configured as information where the character string information MS indicating a character string included in the manuscript image DB and the position information MP indicating the position in which the above-mentioned character string is disposed in the manuscript image DB, instead of this, the manuscript character information M may also be configured only using the character string information MS indicating a character string included in the manuscript image DB.

While, in the above-mentioned configuration, an example has been described where an image reading apparatus according to the present disclosure is applied to the multi function peripheral 1, the image reading apparatus according to the present disclosure is not limited to this, and may also be applied to a copying machine, a scanner apparatus, or the like.

It should be understood that various changes and modifications to the presently preferred embodiments described herein will be apparent to those skilled in the art. Such changes and modifications can be made without departing from the spirit and scope of the present subject matter and without diminishing its intended advantages. In particular it shall be understood that any feature or features described in one embodiment may likewise be implemented in other embodiments of the present invention. It is therefore intended that such changes and modifications be covered by the appended claims.

**Claims**

1. An image reading apparatus comprising:

   an image reading unit (5) configured to read an image of a manuscript;
   a character stamp input information reception unit (81) configured to receive input of character stamp input information (L) serving as information relating to a stamp character (CS) to be superimposed, as an image, on a manuscript image (DB) read by the image reading unit (5);
   a manuscript character information extraction unit (82) configured to extract manuscript character information (M) relating to a character string included in the manuscript image (DB);
   a stamped image generation unit (83) configured to generate a stamp character image (DS) serving as an image expressing a stamp character (CS) corresponding to the character stamp input information (L) received by the character stamp input information reception unit (81), and generate a stamped image (DA) serving as an image where the stamp character image (DS) is superimposed on the manuscript image (DB), by superimposing the generated stamp character image (DS) on the manuscript image (DB); and
   an information-added image data generation unit (84) configured to generate information-added image data where meta-information (N) and the stamped image (DA) are caused to make a set, the meta-information (N) serving as information where the character stamp input information (L) received by the character stamp input information reception unit (81) is added to the manuscript character information (M) extracted by the manuscript character information extraction unit (82).

2. The image reading apparatus according to Claim 1, wherein
   the character stamp input information (L) is information where stamp character information (LS) and stamp position information (LP) are associated with each other, the stamp character information (LS) indicating the stamp character (CS), the stamp position information (LP) indicating a position in which the stamp character image (DS) corresponding to the stamp character (CS) is to be superimposed in the manuscript image (DB),
   the manuscript character information (M) is information where character string information (MS) and position information are associated with each other, the character string information indicating the character string included in the manuscript image, the position information (MP) indicating a position in which the character string is disposed in the manuscript image (DB), and
   the stamped image generation unit (83) generates, as the stamp character image (DS), an image that expresses a stamp character (CS) corresponding to the stamp character information (LS) included in the character stamp input information (L) and has the same resolution as the manuscript image (DB), and generates, as the stamped image (DA), an image where the corresponding generated stamp character image (DS) is superimposed in a position corresponding to the stamp position information (LP) in the manuscript image (DB).

3. The image reading apparatus according to Claim 2, wherein
   the character stamp input information reception unit (81) receives input of the stamp position information (LP) owing to input of information indicating which position of a plurality of positions preliminarily defined in the manuscript image (DB), and
   the manuscript character information extraction unit (82) executes
   processing for converting the manuscript image (DB) into an image used for extracting a resolution preliminarily defined so as to be capable of enhancing extraction accuracy of the manuscript character information (M),
   processing for extracting a character string from the extracting image,
   processing for generating, as the character string information (MS), information indicating the extracted character string,
   processing for acquiring, as the position information (MP), information indicating a position on the manuscript image (DB), the position corresponding to a position on the extracting image, from which the character string has been extracted, and
   processing for generating the manuscript character information (M) with associating the character string information (MS) and the position information (MP) with each other.

4. The image reading apparatus according to any one of Claims 1 to 3, wherein
the information-added image data is data that has a searchable PDF format and where the meta-information (N) and the stamped image (DA) are caused to make a set, by superimposing, on the stamped image (DA), data expressing a character string corresponding to the manuscript character information (M) included in the meta-information (N) and data expressing a stamp character (CS) corresponding to the character stamp input information (L) included in the meta-information (N).

5. A document management system (900) comprising:

an image reading apparatus configured to include an image reading unit (5) configured to read an image of a manuscript,
a character stamp input information reception unit (81) configured to receive input of character stamp input information (L) serving as information relating to a stamp character (CS) to be superimposed, as an image, on a manuscript image (DB) read by the image reading unit (5),
a manuscript character information extraction unit (82) configured to extract manuscript character information (M) relating to a character string included in the manuscript image (DB),
a stamped image generation unit (83) configured to generate a stamp character image (DS) serving as an image expressing a stamp character (CS) corresponding to the character stamp input information (L) received by the character stamp input information reception unit (81), and generate a stamped image (DA) serving as an image where the stamp character image (DS) is superimposed on the manuscript image (DB), by superimposing the generated stamp character image (DS) on the manuscript image (DB), and
an information-added image data generation unit (84) configured to generate information-added image data where meta-information (N) and the stamped image (DA) are caused to make a set, the meta-information (N) being obtained by adding the character stamp input information (L) received by the character stamp input information reception unit (81), to the manuscript character information (M) extracted by the manuscript character information extraction unit (82);
an information-added image data storage unit (21) configured to store therein the information-added image data generated by the information-added image data generation unit (84); and
a search server (2) configured to search for information-added image data whose meta-information (N) includes a search keyword specified by a user, within the information-added image data stored in the information-added image data storage unit (21).

6. The document management system (900) according to Claim 5, wherein
the character stamp input information (L) is information where stamp character information (LS) and stamp position information (LP) are associated with each other, the stamp character information (LS) indicating the stamp character (CS), the stamp position information (LP) indicating a position in which the stamp character image (DS) corresponding to the stamp character (CS) is to be superimposed in the manuscript image (DB),
the manuscript character information (M) is information where character string information (MS) and position information (MP) are associated with each other, the character string information (MS) indicating the character string included in the manuscript image (DB), the position information (MP) indicating a position in which the character string is disposed in the manuscript image (DB), and
the stamped image generation unit (83) generates, as the stamp character image (DS), an image that expresses a stamp character (CS) corresponding to the stamp character information (LS) included in the character stamp input information (L) and has the same resolution as the manuscript image (DB), and generates, as the stamped image (DA), an image where the corresponding generated stamp character image (DS) is superimposed in a position corresponding to the stamp position information (LP) in the manuscript image (DB).

7. The document management system (900) according to Claim 6, wherein
the character stamp input information reception unit (81) receives input of the stamp position information (LP) owing to input of information indicating which position of a plurality of positions preliminarily defined in the manuscript image (DB), and
the manuscript character information extraction unit (82) executes
processing for converting the manuscript image (DB) into an image used for extracting a resolution preliminarily defined so as to be capable of enhancing extraction accuracy of the manuscript character information (M),
processing for extracting a character string from the extracting image,
processing for generating, as the character string information (MS), information indicating the extracted character string,
processing for acquiring, as the position information (MP), information indicating a position on the manuscript image (DB), the position corresponding to a position on the extracting image, from which the character string has been extracted, and

processing for generating the manuscript character information (M) with associating the character string information (MS) and the position information (MP) with each other.

8. The document management system (900) according to any one of Claims 5 to 7, wherein
the information-added image data is data that has a searchable PDF format and where the meta-information (N) and the stamped image (DA) are caused to make a set, by superimposing, on the stamped image (DA), data expressing a character string corresponding to the manuscript character information (M) included in the meta-information (N) and data expressing a stamp character (CS) corresponding to the character stamp input information (L) included in the meta-information (N).

EP 2 704 413 A2

# FIG. 1

# FIG. 2

# FIG. 3

DOCUMENT FEEDING UNIT 6

OPERATION PANEL UNIT 7
DISPLAY UNIT 73
OPERATION KEY UNIT 76

NETWORK COMMUNICATION UNIT 9

90

SEARCH SERVER 2

PC 3

900

CONTROL UNIT 8

CHARACTER STAMP INPUT INFORMATION RECEPTION UNIT 81

MANUSCRIPT CHARACTER INFORMATION EXTRACTION UNIT 82

STAMPED IMAGE GENERATION UNIT 83

INFORMATION-ADDED IMAGE DATA GENERATION UNIT 84

IMAGE READING UNIT 5
EXPOSURE LAMP
CCD

IMAGE FORMING UNIT 4
PAPER TRANSPORT UNIT 41
OPTICAL SCANNING DEVICE 42
PHOTORECEPTOR DRUM 43
DEVELOPING UNIT 44
TRANSFER UNIT 45
FIXING UNIT 46

1

FIG. 4

```
                    ┌─────────┐
                    │  START  │
                    └────┬────┘
                         ▼
```

**S1**
TEXT DATA OF INPUT STAMP CHARACTER CS IS RECEIVED AS STAMP CHARACTER INFORMATION LS

**S2**
INFORMATION INDICATING SUPERIMPOSED POSITION OF STAMP CHARACTER IMAGE DS EXPRESSING STAMP CHARACTER CS RECEIVED IN S1 IS RECEIVED AS STAMP POSITION INFORMATION LP

**S3**
CHARACTER STAMP INPUT INFORMATION L IS GENERATED WHERE STAMP CHARACTER INFORMATION LS RECEIVED IN S1 AND STAMP POSITION INFORMATION LP RECEIVED IN S2 ARE ASSOCIATED WITH EACH OTHER

**S4**
IMAGE DATA IS GENERATED THAT INDICATES IMAGE (MANUSCRIPT IMAGE DB) OBTAINED BY READING IMAGE OF MANUSCRIPT

**S5**
INFORMATION RELATING TO CHARACTER STRING INCLUDED IN MANUSCRIPT IMAGE DB IS EXTRACTED USING CHARACTER RECOGNITION PROCESSING

**S6**
MANUSCRIPT CHARACTER INFORMATION M IS GENERATED THAT INCLUDES INFORMATION RELATING TO CHARACTER STRING, EXTRACTED IN S5

**S7**
STAMP CHARACTER IMAGE DS EXPRESSING STAMP CHARACTER CS RECEIVED IN S1 IS SUPERIMPOSED ON MANUSCRIPT IMAGE DB AND STAMPED IMAGE DA IS GENERATED

**S8**
CHARACTER STAMP INPUT INFORMATION L GENERATED IN S3 IS ADDED TO MANUSCRIPT CHARACTER INFORMATION M GENERATED IN S6 AND META-INFORMATION N IS GENERATED

**S9**
INFORMATION-ADDED IMAGE DATA IS GENERATED WHERE META-INFORMATION GENERATED IN S8 AND STAMPED IMAGE GENERATED IN S7 ARE CAUSED TO MAKE ONE SET

**S10**
INFORMATION-ADDED IMAGE DATA GENERATED IN S9 IS TRANSMITTED TO SEARCH SERVER

```
                    ┌─────────┐
                    │   END   │
                    └─────────┘
```

EP 2 704 413 A2

# FIG. 5

**73**

## Text Stamp

### Stamp

**Off**

**On** >>

Keyboard

| Confidential | Urgent | Copy |

---

| Stamp Method | Position | | Font |
|---|---|---|---|
| Each Print Page | Top Left | Top Right | Size: 9 pt ▼ |
| Each Original Page | Bottom Left | Bottom Right | Style: Italic ▼ |
| | | | Color: Black ▼ |

| Cancel | OK |

EP 2 704 413 A2

## FIG. 6

| Stamp character information LS | Stamp position information LP |
|---|---|
| Confidential | Bottom Right |

CS  L

EP 2 704 413 A2

FIG. 7

# FIG. 8

$$Xb = Xt * Wb / Wt$$
$$Yb = Yt * Hb / Ht$$

Resolution conversion

(Xb,Yb)

(Xt,Yt)

Hb

Wb

DB

DT

Ht

Wt

EP 2 704 413 A2

# FIG. 9

(SXt1,SYt1)

ABC・・・・・EFG    Ct1    (EXt1,EYt1)

(SXt2,SYt2)

HIJ _____

_____
_____
_____
_____
_____    Ct2

_____ LMN.

(EXt2,EYt2)

(SXt3,SYt3)

OPQ _____

_____
_____
_____
_____
_____

Ct3

_____ XYZ.

DT

(EXt3,EYt3)

# FIG. 10

EP 2 704 413 A2

| Character string included in the extracting image | Position information of the area | |
| --- | --- | --- |
| | Top-Left coordinates of the area | Bottom-Right coordinates of the area |
| Ct1 ABC···EFG | (SXt1,SYt1) | (EXt1,EYt1) |
| Ct2 HIJ···LMN. | (SXt2,SYt2) | (EXt2,EYt2) |
| Ct3 OPQ···XYZ. | (SXt3,SYt3) | (EXt3,EYt3) |

# FIG. 11

| Character string information MS | Position information MP | |
|---|---|---|
| | Top-Left coordinates of the area | Bottom-Right coordinates of the area |
| C1 ABC・・・EFG | (SXt1*Wb/Wt,SYt1*Hb/Ht) S1 | (EXt1*Wb/Wt,EYt1*Hb/Ht) E1 |
| C2 HIJ・・・LMN. | (SXt2*Wb/Wt,SYt2*Hb/Ht) S2 | (EXt2*Wb/Wt,EYt2*Hb/Ht) E2 |
| C3 OPQ・・・XYZ. | (SXt3*Wb/Wt,SYt3*Hb/Ht) S3 | (EXt3*Wb/Wt,EYt3*Hb/Ht) E3 |

M

## FIG. 12

EP 2 704 413 A2

# FIG. 13

| Character string included in the stamped image | Position information | |
| --- | --- | --- |
| | Coordinates of the pixel which is a first pixel in the area | Coordinates of the pixel which is located at an end in the area |
| ABC···EFG _C1_ | (SXt1*Wb/Wt,SYt1*Hb/Ht) _S1_ | (EXt1*Wb/Wt,EYt1*Hb/Ht) _E1_ |
| HIJ···LMN. _C2_ | (SXt2*Wb/Wt,SYt2*Hb/Ht) _S2_ | (EXt2*Wb/Wt,EYt2*Hb/Ht) _E2_ |
| OPQ···XYZ. _C3_ | (SXt3*Wb/Wt,SYt3*Hb/Ht) _S3_ | (EXt3*Wb/Wt,EYt3*Hb/Ht) _E3_ |
| Confidential _CS_ | **(Wb-Wd+1, Hb-Hd+1)** _Z1_ | (Wb,Hb) _Z4_ |

EP 2 704 413 A2